# EUROPÄISCHE PATENTANMELDUNG

(11) **EP 4 339 008 A1**
(43) Veröffentlichungstag der Anmeldung: **20.03.2024**
(21) Anmeldenummer: 23181378.3
(22) Anmeldetag: 26.06.2023
(51) Int. Cl.: B60L 7/16, B60L 58/15, B60L 58/16, B60L 58/22, B60L 7/26, B60L 58/25, B60L 58/10

(54) **VERFAHREN ZUM STEUERN EINES ANTRIEBS- UND BREMSSYSTEMS FÜR EIN ELEKTROMOTORRAD**

(30) Priorität: 25.08.2022 DE 102022208803
(71) Anmelder: Robert Bosch GmbH, 70442 Stuttgart (DE)
(72) Erfinder: Klug, Silas, 71106 Magstadt (DE); Moia, Alessandro, 71088 Holzgerlingen (DE)

(57) **Zusammenfassung**

Ein Verfahren zum Steuern eines Antriebs- und Bremssystems (3) für ein Elektromotorrad (1) umfasst: Empfangen von Batteriedaten (21), die einen aktuellen Zustand einer an einen elektrischen Antriebsmotor (5) des Elektromotorrads (1) angeschlossenen Batterie (17) anzeigen, und eines Sollwerts (18) für ein Motormoment, das durch den Antriebsmotor (5) erzeugt werden soll, um das Elektromotorrad (1) abzubremsen; Prüfen anhand der Batteriedaten (21), ob das Motormoment entsprechend dem Sollwert (18) erzeugt werden kann; wenn das Motormoment nicht entsprechend dem Sollwert (18) erzeugt werden kann: Bestimmen eines Kompensationsmoments (31), das durch eine Bremsanlage (9) des Elektromotorrads (1) erzeugt werden soll, um das Elektromotorrad (1) abzubremsen, unter Verwendung des Sollwerts (18); Generieren eines Steuerbefehls (35) zum Ansteuern der Bremsanlage (9), sodass das Kompensationsmoment (31) erzeugt wird.

## Beschreibung

### Gebiet der Erfindung

Die Erfindung betrifft ein computerimplementiertes Verfahren zum Steuern eines Antriebs- und Bremssystems für ein Elektromotorrad. Des Weiteren betrifft die Erfindung ein Antriebs- und Bremssystem für ein Elektromotorrad sowie ein Steuergerät, ein Computerprogramm und ein computerlesbares Medium zum Ausführen des Verfahrens.

### Stand der Technik

Ein von einem elektrischen Antriebsmotor angetriebenes Elektromotorrad kann mittels einer gesonderten Bremsanlage, beispielsweise einer hydraulischen Bremsanlage, und/oder mittels des Antriebsmotors abgebremst werden. Die dabei zurückgewonnene elektrische Energie kann dann zum Aufladen einer an den Antriebsmotor angeschlossenen Batterie verwendet werden. Je nach Zustand der Batterie kann es sein, dass beim Abbremsen des Elektromotorrads durch Rekuperation die Batterie übermäßig belastet wird und/oder nicht die erwartete Bremswirkung eintritt.

### Offenbarung der Erfindung

Vor diesem Hintergrund werden nachstehend ein computerimplementiertes Verfahren zum Steuern eines Antriebs- und Bremssystems für ein Elektromotorrad, ein Steuergerät, ein Computerprogramm, ein computerlesbares Medium sowie ein Antriebs- und Bremssystem für ein Elektromotorrad gemäß den unabhängigen Ansprüchen vorgestellt. Vorteilhafte Weiterbildungen und Verbesserungen des hier vorgestellten Ansatzes ergeben sich aus der Beschreibung und werden durch die abhängigen Ansprüche definiert.

### Vorteile der Erfindung

Ausführungsformen der vorliegenden Erfindung ermöglichen eine automatische Betätigung einer Bremsanlage eines Elektromotorrads, wenn eine Umsetzung eines gewünschten Bremsmoments durch dessen elektrischen Antriebsmotor nicht oder nicht im vollen Umfang möglich ist, beispielsweise weil eine an den Antriebsmotor angeschlossene Batterie dadurch übermäßig beansprucht würde.

Ein erster Aspekt der Erfindung betrifft ein computerimplementiertes Verfahren zum Steuern eines Antriebs- und Bremssystems für ein Elektromotorrad. Das Antriebs-und Bremssystem umfasst einen an eine Batterie angeschlossenen elektrischen Antriebsmotor zum Antreiben mindestens eines Rads des Elektromotorrads und eine Bremsanlage zum Abbremsen mindestens eines Rads des Elektromotorrads. Das Verfahren umfasst: Empfangen von Batteriedaten, die einen aktuellen Zustand der Batterie anzeigen, und eines Sollwerts für ein Motormoment, das durch den Antriebsmotor erzeugt werden soll, um das Elektromotorrad abzubremsen; Prüfen anhand der Batteriedaten, ob das Motormoment entsprechend dem Sollwert erzeugt werden kann; wenn das Motormoment nicht entsprechend dem Sollwert erzeugt werden kann: Bestimmen eines Kompensationsmoments, das durch die Bremsanlage erzeugt werden soll, um das Elektromotorrad abzubremsen, unter Verwendung des Sollwerts; Generieren eines Steuerbefehls zum Ansteuern der Bremsanlage, sodass das Kompensationsmoment erzeugt wird.

Unter "Elektromotorrad" kann beispielsweise auch ein Elektroroller, ein Elektrofahrrad, ein Elektrotrike oder ein Elektroquad verstanden werden.

Das mindestens eine Rad kann ein Vorder- und/oder Hinterrad des Elektromotorrads sein.

Unter "Motormoment" kann ein Rekuperationsbremsmoment verstanden werden, das durch Betreiben des Antriebsmotors als Generator erzeugt werden soll. Dabei kann der Generator elektrische Energie erzeugen, die ausreichen kann, um die Batterie zumindest teilweise zu laden.

Das Motor- und das Kompensationsmoment können sich auf das gleiche Rad oder die gleichen Räder des Elektromotorrads beziehen. Anders ausgedrückt kann die Bremsanlage beim Erzeugen des Kompensationsmoments das gleiche Rad oder die gleichen Räder abbremsen wie der Antriebsmotor beim Erzeugen des Motormoments. Möglich ist aber auch, dass sich das Motor- und das Kompensationsmoment auf unterschiedliche Räder des Elektromotorrads beziehen.

Das Verfahren kann automatisch durch einen Prozessor, beispielsweise eines Steuergeräts des Elektromotorrads, ausgeführt werden.

Wie weiter oben erwähnt, kann es vorkommen, dass ein vom Fahrer (beispielsweise durch Loslassen des Gasgriffs oder Drehen des Gasgriffs in eine entsprechende Bremsstellung) vorgegebenes Motorbremsmoment in bestimmten Fahrsituationen und/oder je nach Zustand der Batterie des Elektromotorrads nicht oder nicht im vorgegebenen Maß durch den Antriebsmotor umgesetzt werden kann. In solchen Fällen rechnet der Fahrer mit einer Bremsung, die dann aber entweder gar nicht oder mit spürbar schwächerer Wirkung als erwartet erfolgt. Um zu bremsen, muss der Fahrer also zusätzlich die Bremsanlage betätigen, beispielsweise durch Betätigen eines Bremshebels und/oder eines Bremspedals. Anders ausgedrückt kann sich das Rekuperationsbremsverhalten des Elektromotorrads abhängig vom Zustand der Batterie spürbar ändern. Dies kann den Fahrkomfort schmälern.

Der hier beschriebene Ansatz bewirkt eine Verringerung des Einflusses des Batteriezustands auf das Fahrerlebnis, insbesondere auf das Bremsverhalten eines mit einer Einhandbedienung ausgestatteten Elektromotorrads, und zwar auch in Fahrsituationen, in denen der Fahrer eine starke rekuperative Verzögerung erwartet, die Batterie dazu jedoch nicht in der Lage ist. Der Ansatz beruht im Wesentlichen darauf, dass das Elektromotorrad in solchen Fahrsituationen durch eine automatische Betätigung dessen Bremsanlage abgebremst wird, insbesondere derart, dass die Bremsanlage einen nicht umsetzbaren Anteil des gewünschten Rekuperationsbremsmoments in Form eines entsprechenden mechanischen Bremsmoments umsetzt. Ein Ausfall der Rekuperationsbremsfunktion kann auf diese Weise teilweise oder vollständig kompensiert werden, ohne dass der Fahrer aktiv werden muss. Dies verbessert den Fahrkomfort gegenüber Ausführungen ohne eine derartige Kompensationsfunktion.

Ein zweiter Aspekt der Erfindung betrifft ein Steuergerät, das einen Prozessor umfasst, der konfiguriert ist, um das vor- und nachstehend beschriebene Verfahren auszuführen. Das Steuergerät kann Hard- und/oder Softwaremodule umfassen. Zusätzlich zum Prozessor kann das Steuergerät einen Speicher und Datenkommunikationsschnittstellen zur drahtlosen und/oder drahtgebundenen Datenkommunikation mit Peripheriegeräten umfassen.

Ein dritter Aspekt der Erfindung betrifft ein Antriebs- und Bremssystem für ein Elektromotorrad. Das Antriebs- und Bremssystem umfasst: einen elektrischen Antriebsmotor zum Antreiben mindestens eines Rads des Elektromotorrads, wobei der Antriebsmotor Anschlusskontakte zum Anschließen des Antriebsmotors an eine Batterie aufweist; eine Bremsanlage zum Abbremsen mindestens eines Rads des Elektromotorrads; eine Sensorik zum Bereitstellen von Batteriedaten, die einen aktuellen Zustand der Batterie anzeigen; ein in eine Bremsstellung verstellbares Bedienelement zum Steuern einer Geschwindigkeit des Elektromotorrads, wobei das Bedienelement ausgebildet ist, um in der Bremsstellung einen Sollwert für ein Motormoment und/oder ein einen Sollwert für ein Motormoment codierendes Signal bereitzustellen, wobei das Motormoment durch den Antriebsmotor erzeugt werden soll, um das Elektromotorrad abzubremsen; das vor- und nachstehend beschriebene Steuergerät.

Die Bremsanlage kann beispielsweise eine hydraulische und/oder elektromechanische Bremsanlage sein. Zusätzlich kann die Bremsanlage ein ABS-System umfassen.

Die Sensorik kann beispielsweise mindestens einen der folgenden Sensoren umfassen: einen Temperatursensor zum Messen einer Temperatur der Batterie, einen Stromsensor zum Messen eines durch die Batterie fließenden Stroms, einen Spannungssensor zum Messen einer an der Batterie anliegenden Spannung.

Unter "Batterie" kann hier auch "mindestens eine Zelle der Batterie" verstanden werden.

Das Bedienelement kann zur Einhandbedienung des Elektromotorrads geeignet sein. Anders ausgedrückt kann das Bedienelement zum Beschleunigen und Abbremsen des Elektromotorrads verwendbar sein.

Das Signal, das den Sollwert für das Motormoment codiert, kann so beschaffen sein, dass durch eine entsprechende Verarbeitung des Signals, beispielsweise im Steuergerät, der Sollwert bestimmt werden kann.

Weitere Aspekte der Erfindung betreffen ein Computerprogramm und ein computerlesbares Medium, auf dem das Computerprogramm gespeichert ist.

Das Computerprogramm umfasst Befehle, die einen Prozessor bei Ausführung des Computerprogramms durch den Prozessor veranlassen, das vor- und nachstehend beschriebene Verfahren auszuführen.

Das computerlesbare Medium kann ein flüchtiger oder nicht flüchtiger Datenspeicher sein. Beispielsweise kann das computerlesbare Medium eine Festplatte, ein USB-Speichergerät, ein RAM, ein ROM, ein EPROM, ein Flash-Speicher oder eine Kombination aus mindestens zwei dieser Beispiele sein. Das computerlesbare Medium kann auch ein einen Download eines Programmcodes ermöglichendes Datenkommunikationsnetzwerk, wie etwa das Internet, oder eine Cloud sein.

Merkmale des vor- und nachstehend beschriebenen Verfahrens können auch Merkmale des Steuergeräts, des Computerprogramms und/oder des computerlesbaren Mediums sein (und umgekehrt).

Ausführungsformen der Erfindung können, ohne die Erfindung einzuschränken, als auf den nachstehend beschriebenen Ideen und Erkenntnissen beruhend angesehen werden.

Gemäß einer Ausführungsform kann beim Prüfen ein möglicher Wert für das Motormoment anhand der Batteriedaten bestimmt werden. In diesem Fall kann erkannt werden, dass das Motormoment nicht entsprechend dem Sollwert erzeugt werden kann, wenn der Sollwert größer als der mögliche Wert ist, beispielsweise eine stärkere Abbremsung als der mögliche Wert anzeigt. Der mögliche Wert kann beispielsweise ein Maximalwert sein, bei dem eine Abbremsung durch den Antriebsmotor gerade noch möglich ist, ohne dass die Batterie übermäßig belastet wird, etwa deren Lebensdauer übermäßig verkürzt wird. Der mögliche Wert kann größer oder kleiner als der Sollwert oder null sein. Der mögliche Wert kann beispielsweise mithilfe einer Lookup-Tabelle bestimmt werden, in der verschiedene mögliche Werte für verschiedene Zustände der Batterie hinterlegt sind. Alternativ kann der mögliche Wert mithilfe einer entsprechenden mathematischen Funktion aus den Batteriedaten berechnet werden.

Gemäß einer Ausführungsform kann das Verfahren ferner umfassen, wenn erkannt wird, dass das Motormoment nicht entsprechend dem Sollwert erzeugt werden kann: Generieren eines weiteren Steuerbefehls zum Ansteuern des Antriebsmotors, sodass das Motormoment zum Abbremsen des Elektromotorrads entsprechend dem möglichen Wert erzeugt wird. Dies hat den Effekt, dass das Elektromotorrad durch den Antriebsmotor und die Bremsanlage in Kombination abgebremst wird.

Gemäß einer Ausführungsform kann zum Bestimmen des Kompensationsmoments eine Differenz zwischen dem Sollwert und dem möglichen Wert bestimmt werden. Insbesondere kann das Kompensationsmoment betragsmäßig gleich der Differenz sein, beispielsweise unter Berücksichtigung einer zulässigen Abweichung von höchstens plus/minus 10 %. Anders ausgedrückt kann ein durch Ansteuern des Antriebsmotors und der Bremsanlage erzeugtes Gesamtbremsmoment gleich dem Sollwert sein oder geringfügig vom Sollwert abweichen. Dies hat den Effekt, dass sich das tatsächliche Bremsverhalten des Elektromotorrads nicht oder zumindest nicht spürbar ändert, wenn der aktuelle Zustand der Batterie die Erzeugung des Motormoments nicht oder nicht im gewünschten Maß zulässt. Das tatsächliche Bremsverhalten entspricht somit dem Bremsverhalten, das der Fahrer erwartet, wenn er den Sollwert für das Motormoment vorgibt, beispielsweise durch entsprechendes Verstellen des Gasgriffs. Dies verbessert den Fahrkomfort.

Gemäß einer Ausführungsform kann beim Prüfen ein zukünftiger Zustand der Batterie unter Verwendung des Sollwerts und der Batteriedaten geschätzt werden. In diesem Fall kann erkannt werden, dass das Motormoment nicht entsprechend dem Sollwert erzeugt werden kann, wenn der zukünftige Zustand der Batterie von einem Sollzustand abweicht. Beispielsweise kann anhand des angeforderten Motormoments eine elektrische Leistung, die der Antriebsmotor im Generatorbetrieb der Batterie zuführt, geschätzt werden. Hierauf kann geschätzt werden, ob sich der Zustand der Batterie gegenüber dem Sollzustand übermäßig verschlechtert (beispielsweise ob die Batterie übermäßig altert), wenn der Batterie diese Leistung zugeführt wird. Der zukünftige Zustand der Batterie kann abhängig vom aktuellen Zustand und, zusätzlich, von mindestens einem dem aktuellen Zustand vorangehenden früheren Zustand der Batterie bestimmt werden (siehe weiter unten).

Gemäß einer Ausführungsform können die Batteriedaten mindestens einen der folgenden Batterieparameter definieren: eine Temperatur der Batterie; einen Ladezustand der Batterie; einen Alterungszustand der Batterie; einen durch die Batterie fließenden Strom; eine an der Batterie anliegende Spannung. Solche Batterieparameter ermöglichen eine genaue und zuverlässige Definition des aktuellen Zustands der Batterie. Unter "Batterie" kann hier auch "mindestens eine Zelle der Batterie" verstanden werden.

Gemäß einer Ausführungsform können die Batteriedaten ferner mindestens einen dem aktuellen Zustand der Batterie vorangehenden früheren Zustand der Batterie anzeigen. Anders ausgedrückt können die Batteriedaten eine zeitliche Änderung des Zustands der Batterie oder einen zeitlichen Verlauf einer oder mehrerer Batterieparameter anzeigen. Dies kann die Genauigkeit des Verfahrens verbessern.

Beispielsweise können die Batteriedaten einen aktuellen Wert für mindestens einen den aktuellen Zustand der Batterie definierenden Batterieparameter umfassen, etwa einen oder mehreren der oben genannten Batterieparameter. Zum Schätzen des zukünftigen Zustands kann dann ein Schätzwert für den mindestens einen Batterieparameter unter Verwendung des aktuellen Werts und des Sollwerts bestimmt werden. Dabei kann geprüft werden, ob der Schätzwert innerhalb oder außerhalb eines zulässigen Wertebereichs liegt. Dementsprechend kann erkannt werden, dass das Motormoment nicht entsprechend dem Sollwert erzeugt werden kann, wenn der Schätzwert außerhalb des zulässigen Wertebereichs liegt. Anders ausgedrückt kann die Erkennung anhand einer oder mehrerer Schwellenwertvergleiche erfolgen. Dies ermöglicht eine einfache Implementierung des Verfahrens.

Zusätzlich können die Batteriedaten mindestens einen früheren Wert für den mindestens einen Batterieparameter umfassen. Der mindestens eine frühere Wert kann zu einem früheren Zeitpunkt als der aktuelle Wert bestimmt worden sein. Der Schätzwert kann dann ferner unter Verwendung des mindestens einen früheren Werts bestimmt werden. Anders ausgedrückt kann der Schätzwert aus einem zeitlichen Verlauf des mindestens einen Batterieparameters bestimmt werden. Dies verbessert die Genauigkeit der Schätzung.

Gemäß einer Ausführungsform kann beim Prüfen und/oder Bestimmen des Kompensationsmoments ferner mindestens einer der folgenden Fahrdynamikparameter ausgewertet werden: eine aktuelle Drehzahl des Antriebsmotors, eine aktuelle Drehrichtung des Antriebsmotors, eine durch den Antriebsmotor aktuell erzeugte Antriebskraft, eine durch die Bremsanlage aktuell erzeugte Bremskraft.

Werte für diese(n) Fahrdynamikparameter können durch einen entsprechenden Sensor und/oder durch Berechnung bestimmt worden sein. Diese Werte können beispielsweise mit vorbestimmten Schwellenwerten verglichen werden, um zu bestimmen, ob das Motormoment entsprechend dem Sollwert erzeugt werden kann oder nicht.

Beispielsweise kann die Bremskraft automatisch, z. B. durch eine ABS-Funktion, und/oder durch den Fahrer erzeugt worden sein. Das Kompensationsmoment kann dann an diese Bremskraft angepasst, beispielsweise um einen der Bremskraft entsprechenden Wert verringert werden. Somit kann verhindert werden, dass das Elektromotorrad durch Erzeugen des Kompensationsmoments bei einem Bremskraftwert, der ungleich null ist, zu stark oder unerwartet stark abgebremst wird.

Es ist möglich, dass erkannt wird, dass das Motormoment nicht entsprechend dem Sollwert erzeugt werden kann, wenn zusätzlich oder alternativ zur Auswertung der Batteriedaten erkannt wird, dass die aktuelle Drehrichtung des Antriebsmotors (oder eine aktuelle Drehrichtung des vom Antriebsmotor angetriebenen Rads oder der vom Antriebsmotor angetriebenen Räder) dem Motormoment entsprechend dem Sollwert entgegengesetzt ist. Dies kann beispielsweise beim Anfahren der Fall sein, wenn der Fahrer ein Motormoment zum Beschleunigen des Elektromotorads vorgibt und das Elektromotorrad gleichzeitig zurückrollt. In diesem Fall ist es sinnvoll, wenn das Elektromotorrad durch die Bremsanlage abgebremst wird. Somit wird verhindert, dass das Elektromotorrad zurückrollt.

Zudem ist es möglich, dass erkannt wird, dass das Motormoment nicht entsprechend dem Sollwert erzeugt werden kann, wenn - zusätzlich oder alternativ zur Auswertung der Batteriedaten - anhand des mindestens einen Fahrdynamikparameters erkannt wird, dass das Elektromotorrad bis zum Stillstand abgebremst wird. In diesem Fall kann es aufgrund der niedrigen Drehzahl des Antriebsmotors dazu kommen, dass die Batterie entladen statt geladen wird. Dies kann verhindert werden, indem das Elektromotorrad beim Abbremsen bis zum Stillstand zumindest teilweise durch die Bremsanlage statt durch den Antriebsmotor abgebremst wird.

Gemäß einer Ausführungsform kann das Bedienelement ein in die Bremsstellung drehbarer Drehgriff sein. Ein solcher Drehgriff kann beispielsweise ein an einem Lenker des Elektromotorrads montierbarer Gasgriff sein. Dabei kann der Gasgriff auch als Bremsgriff zum Vorgeben eines gewünschten Motormoments fungieren.

Gemäß einer Ausführungsform kann das Bedienelement so ausgebildet sein, dass es in einer Stellung außerhalb der Bremsstellung mit einer in Richtung der Bremsstellung wirkenden Rückstellkraft beaufschlagt wird. Dadurch bewegt sich das Bedienelement, beispielsweise der Drehgriff, beim Loslassen von allein in die Bremsstellung zurück. Anders ausgedrückt kann es sich bei der Bremsstellung um eine Ruhe- oder Ausgangsstellung des Bedienelements handeln. Die Rückstellung des Bedienelements kann beispielsweise durch einen Federmechanismus und/oder elektromechanisch erfolgen. Dies ermöglicht eine komfortable und sichere Einhandsteuerung, bei der der Fahrer die Geschwindigkeit des Elektromotorrads mit einer Hand steuern kann, ohne zum Abbremsen zwingend die Bremsanlage, beispielsweise einen Bremshebel und/oder ein Bremspedal zum Betätigen der Bremsanlage, betätigen zu müssen.

### Kurze Beschreibung der Zeichnungen

Nachfolgend werden Ausführungsformen der Erfindung unter Bezugnahme auf die beigefügten Zeichnungen beschrieben. Weder die Beschreibung noch die Zeichnungen sind als die Erfindung einschränkend auszulegen.
Fig. 1 zeigt ein Elektromotorrad mit einem Antriebs- und Bremssystem gemäß einer Ausführungsform der Erfindung.
Fig. 2 zeigt ein Steuergerät gemäß einer Ausführungsform der Erfindung.

Die Figuren sind lediglich schematisch und nicht maßstabsgetreu. Gleiche Bezugszeichen in verschiedenen Zeichnungen bezeichnen gleiche oder gleichwirkende Merkmale.

### Ausführungsformen der Erfindung

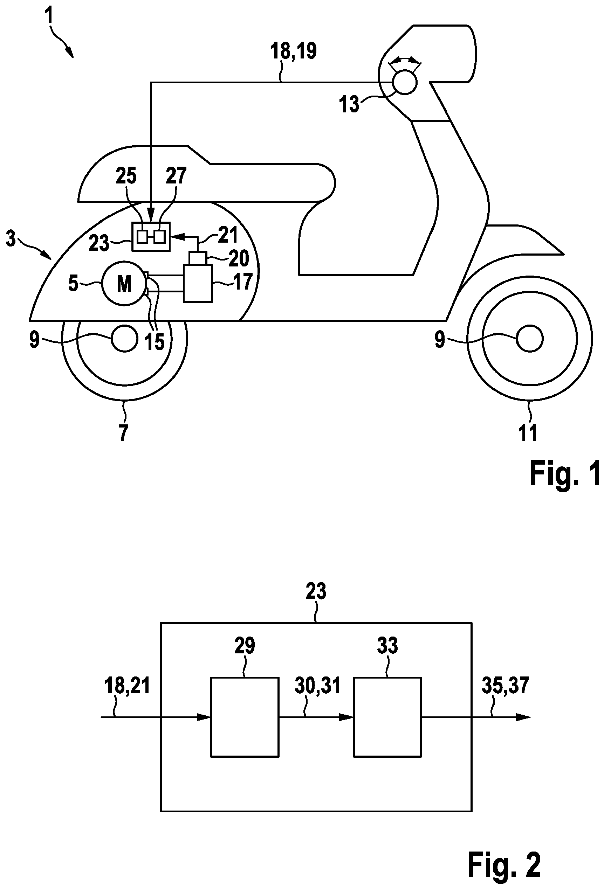

Fig. 1 zeigt ein Elektromotorrad 1, hier in Form eines Elektrorollers, das mit einem Antriebs- und Bremssystem 3 ausgestattet ist. Das Antriebs- und Bremssystem 3 umfasst einen elektrischen Antriebsmotor 5, der mit einem Hinterrad 7 des Elektromotorrads 1 gekoppelt ist, um das Hinterrad 7 anzutreiben, d. h. zu beschleunigen oder abzubremsen. Daneben umfasst das Antriebs- und Bremssystem 3 eine Bremsanlage 9, beispielsweise eine hydraulische Bremsanlage, die ausgebildet ist, um das Hinterrad 7 und/oder ein Vorderrad 11 des Elektromotorrads 1 abzubremsen, sowie ein Bedienelement 13, hier einen an einem Lenker des Elektromotorrads 1 montierten Drehgriff, zum Steuern einer Geschwindigkeit des Elektromotorrads 1.

Die Bremsanlage 9 kann beispielsweise durch Betätigen eines zusätzlichen Bremshebels und/oder eines zusätzlichen Bremspedals (nicht gezeigt) durch den Fahrer des Elektromotorrads 1 ansteuerbar sein.

Der Antriebsmotor 5 ist über Anschlusskontakte 15 direkt oder indirekt an eine Batterie 17 zum Versorgen des Antriebs- und Bremssystems 3 mit elektrischer Energie angeschlossen.

Das Bedienelement 13 ist in diesem Beispiel zwischen einer Bremsstellung und einer Endstellung verstellbar. Die beiden Stellungen können beispielsweise durch zwei Endanschläge vorgegeben sein. Alternativ kann es sich bei der Bremsstellung um eine variable Stellung zwischen zwei Endanschlägen handeln. Das Bedienelement 13 ist ausgebildet, um in der Bremsstellung einen Sollwert 18 für ein Motormoment bereitzustellen, das durch Betreiben des Antriebsmotors 5 als Generator, d. h. durch Rekuperation, erzeugt werden soll, um das Elektromotorrad 1 abzubremsen. Eine dabei zurückgewonnene elektrische Energie kann dann zum Aufladen der Batterie 17 verwendet werden.

Alternativ kann das Bedienelement 13 ausgebildet sein, um statt des Sollwerts 18 ein analoges oder digitales elektrisches Signal 19 bereitzustellen, durch dessen Verarbeitung der Sollwert 18 bestimmt werden kann.

Das Bedienelement 13 kann beispielsweise durch Federkraft in die Bremsstellung als Ausgangsstellung zurückstellbar sein, wenn der Fahrer das Bedienelement 13 loslässt.

Die Endstellung kann beispielsweise einer Vollgasstellung entsprechen.

Das Antriebs- und Bremssystem 3 umfasst ferner eine Sensorik 20, die ausgebildet ist, um bestimmte Batterieparameter, die einen aktuellen Zustand der Batterie 17 definieren, zu messen und in Form von Batteriedaten 21 an ein Steuergerät 23 des Antriebs- und Bremssystems 3 zu senden.

Die Batteriedaten 21 können beispielsweise einen aktuellen Wert für mindestens einen der folgenden Batterieparameter umfassen: eine Temperatur der Batterie 17; einen Ladezustand der Batterie 17; einen Alterungs- oder Gesundheitszustand der Batterie 17; einen durch die Batterie 17 fließenden Strom; eine an der Batterie 17 anliegende Spannung.

Zusätzlich können die Batteriedaten 21 mindestens einen früheren Wert für mindestens einen dieser Batterieparameter umfassen, der zu einem früheren Zeitpunkt als der jeweilige aktuelle Wert bestimmt wurde.

Das Steuergerät 23 umfasst einen Speicher 25, in dem ein Computerprogramm gespeichert ist, und einen Prozessor 27, der konfiguriert ist, um durch Ausführen des Computerprogramms das nachstehend beschriebene Verfahren zum Steuern des Antriebs- und Bremssystems 3 auszuführen.

Zunächst werden die Batteriedaten 21 und der Sollwert 18 im Steuergerät 23 empfangen.

Anschließend werden die Batteriedaten 21 und der Sollwert 18 als Eingabedaten durch ein Auswertungsmodul 29 verarbeitet, das anhand der Eingabedaten prüft, ob das gewünschte Motormoment zum Abbremsen des Elektromotorrads 1 durch den Antriebsmotor 5 aktuell erzeugt werden kann.

Dabei kann das Auswertungsmodul 29 beispielsweise einen möglichen Wert 30 für das Motormoment anhand der Batteriedaten 21 bestimmen und den Sollwert 18 mit dem möglichen Wert 30 vergleichen. Erkennt das Auswertungsmodul 29 eine Abweichung des Sollwerts 18 vom möglichen Wert 30, so kann es ein durch die Bremsanlage 9 zu erzeugendes Kompensationsmoment 31 bestimmen, das dieser Abweichung entspricht, beispielsweise betragsmäßig gleich einer Differenz zwischen dem Sollwert 18 und dem möglichen Wert 30 ist.

Aus dem Kompensationsmoment 31 kann dann in einem Steuerungsmodul 33 des Steuergeräts 23 ein Steuerbefehl 35 zum entsprechenden Ansteuern der Bremsanlage 9 erzeugt werden.

Falls der mögliche Wert 30 nicht null ist, kann das Steuerungsmodul 33 aus dem möglichen Wert 30 zusätzlich einen weiteren Steuerbefehl 37 zum entsprechenden Ansteuern des Antriebsmotors 5 erzeugen. In diesem Fall wird das Elektromotorrad 1 also gleichzeitig durch die Bremsanlage 9 und den Antriebsmotor 5 abgebremst, ohne dass der Fahrer zusätzlich zum Bedienelement 13 zwingend den Bremshebel und/oder das Bremspedal der Bremsanlage 9 betätigen muss. Das dabei erzeugte Gesamtbremsmoment, d. h. die Summe aus dem Kompensationsmoment 31 und dem Motormoment entsprechend dem möglichen Wert 30, kann dem Sollwert 18 entsprechen, eventuell unter Berücksichtigung eines vorgegebenen Toleranzbereichs, z. B. plus/minus 5 %.

Alternativ oder zusätzlich kann das Auswertungsmodul 29 aus den Eingabedaten einen zukünftigen Zustand der Batterie 17 schätzen und mit einem Sollzustand vergleichen, der im Speicher 25 gespeichert sein kann. Bei einer zu starken Abweichung des zukünftigen Zustands vom Sollzustand kann das Auswertungsmodul 29 dann ein entsprechendes Kompensationsmoment 31 bestimmen, um zu verhindern, dass die Batterie 17 durch eine Rekuperationsbremsung zu stark belastet wird.

Zur Schätzung des zukünftigen Zustands der Batterie 17 kann beispielsweise der aktuelle Wert des Batterieparameters bzw. können die aktuellen Werte der Batterieparameter (siehe weiter oben) zusammen mit dem früheren Wert des Batterieparameters bzw. den früheren Werten der Batterieparameter ausgewertet werden.

Es ist möglich, dass ein Antriebsstrang einer Fahrdynamikregelung des Elektromotorrads 1 ein Signal zur Verfügung stellt, das eine aktuell erlaubte Maximalverzögerung durch Rekuperation definiert. Gibt der Fahrer ein negatives Drehmoment vor, etwa durch Zurückdrehen des Bedienelements 13 bei hoher Geschwindigkeit, und liegt dieses Drehmoment über einem aktuellen Batterielimit, so kann beispielsweise ein Differenzmoment zwischen verfügbarem und gewünschtem Motormoment durch einen aktiven Druckaufbau in einem hydraulischen Reibbremssystem als der Bremsanlage 9 gestellt werden. Dies kann unter Berücksichtigung eines berechneten und/oder gemessenen hydraulischen Drucks in der Bremsanlage 9 erfolgen, der einer aktuell erzeugten Bremskraft oder einem aktuellen erzeugten Bremsmoment entspricht. Der Druck kann beispielsweise durch einen in einen Bremssattel integrierten Drucksensor gemessen werden. Alternativ oder zusätzlich kann der Druck aus der Verzögerung des Elektromotorrads 1 geschätzt werden.

Eine fehlende oder unzureichende Rekuperation kann auch beim Zurückrollen und gleichzeitigen Gasgeben problematisch sein. Dies tritt insbesondere beim Anfahren auf. In diesem Fall kann ein entsprechendes Kompensationsmoment 31 bestimmt und durch die Bremsanlage 9 erzeugt werden.

Daneben gibt es Situationen, in denen eine Rekuperation zwar möglich ist, aber das Laden der Batterie 17 mit der dabei gewonnenen elektrischen Energie die Lebensdauer der Batterie 17 übermäßig verkürzen könnte. In solchen Situationen sollte die Rekuperationsbremsung durch eine automatische Betätigung der Bremsanlage 9 mit dem vorstehend beschriebenen Verfahren ersetzt oder ergänzt werden.

Des Weiteren kann das Verfahren bei einer Abbremsung bis zum Stillstand eingesetzt werden. Hierbei können negative Drehmomente durch einen Fahrregler vorgegeben werden, die jedoch aufgrund der niedrigen Drehzahl bei der Abbremsung keine positive Energiebilanz haben. Auch in diesem Fall kann die Rekuperationsbremsung durch eine automatische Betätigung der Bremsanlage 9 mit dem vorstehend beschriebenen Verfahren ersetzt oder ergänzt werden. Dadurch kann die Reichweite des Elektromotorrads 1 vergrößert werden.

Abschließend wird darauf hingewiesen, dass Begriffe wie "aufweisen", "umfassen", "mit" usw. keine anderen Elemente oder Schritte ausschließen und unbestimmte Artikel wie "ein" oder "eine" keine Vielzahl ausschließen. Bezugszeichen in den Ansprüchen sind nicht als Einschränkung anzusehen.

## Patentansprüche

1. Computerimplementiertes Verfahren zum Steuern eines Antriebs- und Bremssystems (3) für ein Elektromotorrad (1), wobei das Antriebs- und Bremssystem (3) einen an eine Batterie (17) angeschlossenen elektrischen Antriebsmotor (5) zum Antreiben mindestens eines Rads (7, 11) des Elektromotorrads (1) und eine Bremsanlage (9) zum Abbremsen mindestens eines Rads (7, 11) des Elektromotorrads (1) umfasst, wobei das Verfahren umfasst:
Empfangen von Batteriedaten (21), die einen aktuellen Zustand der Batterie (17) anzeigen, und eines Sollwerts (18) für ein Motormoment, das durch den Antriebsmotor (5) erzeugt werden soll, um das Elektromotorrad (1) abzubremsen;
Prüfen anhand der Batteriedaten (21), ob das Motormoment entsprechend dem Sollwert (18) erzeugt werden kann;
wenn das Motormoment nicht entsprechend dem Sollwert (18) erzeugt werden kann:
Bestimmen eines Kompensationsmoments (31), das durch die Bremsanlage (9) erzeugt werden soll, um das Elektromotorrad (1) abzubremsen, unter Verwendung des Sollwerts (18);
Generieren eines Steuerbefehls (35) zum Ansteuern der Bremsanlage (9), sodass das Kompensationsmoment (31) erzeugt wird.

2. Verfahren nach Anspruch 1,
wobei beim Prüfen ein möglicher Wert (30) für das Motormoment anhand der Batteriedaten (21) bestimmt wird;
wobei erkannt wird, dass das Motormoment nicht entsprechend dem Sollwert (18) erzeugt werden kann, wenn der Sollwert (18) größer als der mögliche Wert (30) ist.

3. Verfahren nach Anspruch 2, ferner umfassend, wenn erkannt wird, dass das Motormoment nicht entsprechend dem Sollwert (18) erzeugt werden kann:
Generieren eines weiteren Steuerbefehls (37) zum Ansteuern des Antriebsmotors (5), sodass das Motormoment zum Abbremsen des Elektromotorrads (1) entsprechend dem möglichen Wert (30) erzeugt wird.

4. Verfahren nach Anspruch 2 oder 3,
wobei zum Bestimmen des Kompensationsmoments (31) eine Differenz zwischen dem Sollwert (18) und dem möglichen Wert (30) bestimmt wird.

5. Verfahren nach einem der vorhergehenden Ansprüche,
wobei beim Prüfen ein zukünftiger Zustand der Batterie (17) unter Verwendung des Sollwerts (18) und der Batteriedaten (21) geschätzt wird;
wobei erkannt wird, dass das Motormoment nicht entsprechend dem Sollwert (18) erzeugt werden kann, wenn der zukünftige Zustand der Batterie (17) von einem Sollzustand abweicht.

6. Verfahren nach einem der vorhergehenden Ansprüche,
wobei die Batteriedaten (21) mindestens einen der folgenden Batterieparameter definieren: eine Temperatur der Batterie (17); einen Ladezustand der Batterie (17); einen Alterungszustand der Batterie (17); einen durch die Batterie (17) fließenden Strom; eine an der Batterie (17) anliegende Spannung.

7. Verfahren nach einem der vorhergehenden Ansprüche,
wobei die Batteriedaten (21) ferner mindestens einen dem aktuellen Zustand der Batterie (17) vorangehenden früheren Zustand der Batterie (17) anzeigen.

8. Verfahren nach einem der vorhergehenden Ansprüche,
wobei beim Prüfen und/oder Bestimmen des Kompensationsmoments (31) ferner mindestens einer der folgenden Fahrdynamikparameter ausgewertet wird: eine aktuelle Drehzahl des Antriebsmotors (5), eine aktuelle Drehrichtung des Antriebsmotors (5), eine durch den Antriebsmotor (5) aktuell erzeugte Antriebskraft, eine durch die Bremsanlage (9) aktuell erzeugte Bremskraft.

9. Steuergerät (23), umfassend einen Prozessor (27), der konfiguriert ist, um das Verfahren nach einem der vorhergehenden Ansprüche auszuführen.

10. Antriebs- und Bremssystem (3) für ein Elektromotorrad (1), wobei das Antriebs-und Bremssystem (3) umfasst:
einen elektrischen Antriebsmotor (5) zum Antreiben mindestens eines Rads (7, 11) des Elektromotorrads (1), wobei der Antriebsmotor (5) Anschlusskontakte (15) zum Anschließen des Antriebsmotors (5) an eine Batterie (17) aufweist;
eine Bremsanlage (9) zum Abbremsen mindestens eines Rads (7, 11) des Elektromotorrads (1);
eine Sensorik (20) zum Bereitstellen von Batteriedaten (21), die einen aktuellen Zustand der Batterie (17) anzeigen;
ein in eine Bremsstellung verstellbares Bedienelement (13) zum Steuern einer Geschwindigkeit des Elektromotorrads (1), wobei das Bedienelement (13) ausgebildet ist, um in der Bremsstellung einen Sollwert (18) für ein Motormoment und/oder ein einen Sollwert (18) für ein Motormoment codierendes Signal (19) bereitzustellen, wobei das Motormoment durch den Antriebsmotor (5) erzeugt werden soll, um das Elektromotorrad (1) abzubremsen;
das Steuergerät (23) nach Anspruch 9.

11. Antriebs- und Bremssystem (3) nach Anspruch 10,
wobei das Bedienelement (13) ein in die Bremsstellung drehbarer Drehgriff ist.

12. Antriebs- und Bremssystem (3) nach Anspruch 10 oder 11,
wobei das Bedienelement (13) so ausgebildet ist, dass es in einer Stellung außerhalb der Bremsstellung mit einer in Richtung der Bremsstellung wirkenden Rückstellkraft beaufschlagt wird.

13. Computerprogramm, umfassend Befehle, die einen Prozessor (27) bei Ausführung des Computerprogramms durch den Prozessor (27) veranlassen, das Verfahren nach einem der Ansprüche 1 bis 8 auszuführen.

14. Computerlesbares Medium, auf dem das Computerprogramm nach Anspruch 13 gespeichert ist.
